# EUROPÄISCHE PATENTANMELDUNG

(11) **EP 2 347 845 A1**
(43) Veröffentlichungstag der Anmeldung: **27.07.2011**
(21) Anmeldenummer: 11000619.4
(22) Anmeldetag: 26.01.2011
(51) Int. Cl.: B23D 57/00

(54) **Drahtführungsrolle zur Verwendung in Drahtsägen**

(30) Priorität: 26.01.2010 DE 102010005718
(71) Anmelder: Schott Solar AG, 55122 Mainz (DE)
(72) Erfinder: Berg, Michael Dr., 07749 Jena (DE); Loeber, Andreas, 07546 Jena (DE); Liesk, Antje, 07743 Jena (DE)
(74) Vertreter: Fritzsche, Thomas

(57) **Zusammenfassung**

Drahtführungsrolle (3) zur Verwendung in Drahtsägen zum gleichzeitigen Abtrennen einer Vielzahl von Scheiben von einem Werkstück, die eine Vielzahl von Rillen (2) aufweist, über welche ein Sägedraht (1) geführt ist, sowie Verfahren zum gleichzeitigen Abtrennen einer Vielzahl von Scheiben von einem Werkstück mittels einer Drahtsäge.

## Beschreibung

Die Erfindung betrifft eine Drahtführungsrolle zur Verwendung in Drahtsägen zum gleichzeitigen Abtrennen einer Vielzahl von Scheiben von einem Werkstück, die eine Vielzahl von Rillen aufweist, über welche ein Sägedraht geführt ist, sowie ein Verfahren zum gleichzeitigen Abtrennen einer Vielzahl von Scheiben von einem Werkstück mittels einer Drahtsäge.

Halbleiterscheiben werden in der Regel dadurch hergestellt, dass ein prismatisches, mono- oder polykristallines Werkstück aus dem Halbleitermaterial mit Hilfe einer Drahtsäge in einem Arbeitsgang gleichzeitig in eine Vielzahl von Halbleiterscheiben aufgetrennt wird. In der Regel wird ein Drahtgatter der Drahtsäge von einer Vielzahl paralleler Drahtabschnitte gebildet, die zwischen mindestens zwei Drahtführungsrollen aufgespannt werden, wobei die Drahtführungsrollen drehbar gelagert sind und von denen mindestens eine angetrieben ist. Die Drahtabschnitte gehören in der Regel zu einem einzigen, endlichen Draht, der spiralförmig um das Rollensystem geführt ist und von einer Vorratsrolle auf eine Aufnahmerolle abgespult wird.

Die Herstellung von Halbleiterscheiben oder Wafern aus prismatischem Halbleitermaterial, beispielsweise aus Ein- oder Mehrkristallstäben, stellt hohe Anforderungen an das Sägeverfahren. Das Sägeverfahren hat zum Ziel, dass jede gesägte Halbleiterscheibe zwei Flächen aufweist, die möglichst eben sind und sich parallel gegenüber liegen.

Neben der Dickenvariation ist die Ebenheit der beiden Flächen der Halbleiterscheibe von großer Bedeutung. Nach dem Auftrennen eines Halbleiterkristalls, beispielsweise eines Siliciumkristalls, mittels einer Drahtsäge weisen die dadurch hergestellten Scheiben eine wellige Oberfläche auf. Bei Wafern für die Mikroelektronik kann in folgenden Schritten, wie z. B. Schleifen oder Läppen, diese Welligkeit teilweise oder vollständig entfernt werden, abhängig von der Wellenlänge und Amplitude der Welligkeit sowie von der Tiefe des Materialabtrags. Im ungünstigen Fall können derartige Oberflächenunregelmäßigkeiten auch noch nach einer Politur auf der fertigen Halbleiterscheibe nachgewiesen werden, wo sie sich negativ auf die lokale Geometrie auswirken. Derartige Nachbehandlungen kommen jedoch bei Wafern für die Photovoltaik nicht zur Anwendung. Die Parameter für die Abweichung der tatsächlichen Scheibenform von der angestrebten idealen Scheibenform hängen entscheidend von der Geradheit des Schnittes ab, welche wiederum entscheidend durch Eigenschaften der verwendeten Drahtführungsrollen bestimmt ist.

Die Drahtführungsrollen weisen eine Vielzahl von Rillen auf, durch die der Sägedraht geführt und wodurch das Drahtgatter der Drahtsäge gebildet wird. Die Druckschrift DE 10 2007 019 566 A1 betrifft eine Drahtführungsrolle mit einer Beschichtung, die widerstandsfähig gegen das abrasive Slurry bzw. gegen Abrieb aufgrund von Schneiddrähten mit gebundenem Korn ist. Die vorgeschlagene konstante, u-förmige Rillengeometrie berücksichtigt jedoch nicht die Abnutzung des Sägedrahts in axialer Richtung der Drahtführungsrolle.

Es kommt im Verlauf des Sägevorgangs zu einem Verschleiß des Sägedrahts, der im Wesentlichen zu einer Dickenabnahme und/oder zu einer Ovalität des Sägedrahtquerschnitts führt. Eine solche Veränderung der Geometrie des Sägedrahts ist nachteilig, da bei einer derartigen Veränderung die auf den unverschlissenen Draht angepasste Rillengeometrie keine optimale Führung des Sägedrahtes gewährleisten kann. Dadurch kommt es zu einer verstärkten Lateralbewegung des Sägedrahts quer zu seiner Längsachse, was zu einer unsauberen Sägeoberfläche führt und wodurch auch die Gefahr eines Drahtrisses erhöht wird. Die entlang der Drahtführungsrolle zunehmend schlechter werdenden Übereinstimmung der Draht- und Rillenkontur begünstigt zudem ein verstärktes Eindringen der Läppsuspension (Sägeslurry) und somit eine Verschmutzung der Rillen. Diese verschlechtert ihrerseits die Führung des Sägedrahts mit der Folge weiterer Qualitätsverschlechterung der Wafer.

Eine Aufgabe der Erfindung besteht somit darin, geeignete Drahtführungsrollen zum Drahtsägen bereitzustellen und die Probleme des Stands der Technik zu vermeiden.

Gegenstand der Erfindung ist eine Drahtführungsrolle zur Verwendung in Drahtsägen zum gleichzeitigen Abtrennen einer Vielzahl von Scheiben von einem Werkstück, die eine Vielzahl von Rillen aufweist, über welche ein Sägedraht geführt ist, wobei eine geometrische Form der Rillen einer in axialer Richtung der Drahtführungsrolle fortschreitenden Querschnittsänderung des Sägedrahts angepasst ist. Die axiale Richtung der Drahtführungsrolle wird durch ihre Drehachse bestimmt.

Der Sägedraht wird in axialer Richtung fortschreitend über die Vielzahl von Rillen gefördert und unterliegt dabei einer Querschnittsänderung durch Verschleiß. Die vorgeschlagene, in axialer Richtung sukzessive Anpassung der geometrischen Form der Rillen an diese Querschnittsänderung erlaubt vorteilhaft, den Eingriff zwischen Sägedraht und Drahtführungsrolle zu verbessern. Da die Drahtführungsrolle in der Regel eine Vielzahl von ringförmig geschlossenen Rillen aufweist, erfolgt die Anpassung der geometrischen Form der Rillen in axialer Richtung der Drahtführungsrolle vorzugsweise im Sinne einer stetigen Veränderung von einem Ende der Drahtführungsrolle bis zu dem anderen Ende. Weiterhin bevorzugt erfolgt die Anpassung in diskreten Schritten, also beispielsweise von Rille zu Rille. Besonders bevorzugt erfolgt die Anpassung in einer Anzahl von diskreten Schritten, welche einem Bruchteil der Anzahl der Rillen der Drahtführungsrolle entspricht. Weiterhin bevorzugt erfolgt die Anpassung in äquidistanten Schritten. Die beispielsweise mittels Schleifscheiben von entsprechender Geometrie in die Drahtführungsrollen eingebrachten Rillen lassen sich so wirtschaftlicher herstellen. Die Drahtführungsrolle weist insbesondere eine im Wesentlichen zylindrische Mantelfläche auf und ist dadurch vorteilhaft mit geringem Aufwand herstellbar, transportierbar und lagerbar, beispielsweise im Vergleich zu Rollen mit abgestuften oder konischen Mantelflächen.

Die Drahtführungsrolle weist eine Vielzahl von in der Regel ringförmig geschlossenen Rillen zu Führung des Sägedrahts auf. Alle Rillen weisen eine definierte geometrische Form mit einem gekrümmten Rillengrund, Rillenflanken mit einem bestimmten Öffnungswinkel und einer Rillentiefe auf.

Aufgrund der erfindungsgemäßen Anpassung der geometrischen Form an die Querschnittsänderung des Sägedrahts unterscheidet sich die geometrische Form an dem ersten Ende der Drahtführungsrolle, beispielsweise einer Zuführseite, auf welcher der frische Draht zugeführt wird, von der geometrischen Form an dem anderen Ende, wo der gebrauchte Draht die Drahtführungsrolle verlässt. Gemäß einer bevorzugten Ausführungsform ist mindestens einer der die geometrische Form der Rillen bestimmenden Parameter
- Krümmungsradius R des gekrümmten Rillengrunds,
- Öffnungswinkel a der Rille und
- Rillentiefe T der Rille
an die in axialer Richtung der Drahtführungsrolle fortschreitenden Querschnittsänderung des Sägedrahts angepasst. Zu erwarten ist, dass der Verschleiß an der Rillenkontur der Drahtführungsrolle durch die vorgeschlagenen Maßnahmen vorteilhaft verringert wird. Darüber hinaus werden die Vibrationen auf dem Drahtfeld insgesamt verringert, wodurch zum einen die Qualität der Oberflächen steigt und zum anderen die Gefahr eines Sägedrahtrisses vermindert wird. Die Führung des Drahts in der Rille ist vorteilhaft verbessert, wodurch eine Lateralbewegung des Drahts quer zu seiner Längsachse minimiert wird. Das Eindringen von Läppsuspension in die Rillen wird vorteilhaft verhindert, so dass es nicht zu einem Zusetzen der Rillenkontur kommt. Die Reibung zwischen Draht und Rille wird vorteilhaft erhöht, wodurch geringerer Schlupf auftreten kann. Unter der Rillentiefe T ist der Abstand zwischen dem Rillengrund und der theoretischen, im Wesentlichen zylindrischen Mantelfläche der Drahtführungsrolle zu verstehen. Es wird dabei davon ausgegangen, dass die Mantelfläche zylindrisch ausgebildet ist, so dass die Summe aus der Rillentiefe T und dem Radius von der Längsachse der Drahtführungsrolle zu dem Rillengrund stets dem Radius der Mantelfläche entspricht. Der Fachmann erkennt, dass der Radius zum Rillengrund an sich einer der für die Erfindung wesentlichen Parameter ist, welcher hier der Einfachheit halber durch die in unmittelbarem Zusammenhang dazu stehende Rillentiefe T angegeben ist.

Vorzugsweise wird der Krümmungsradius R des gekrümmten Rillengrunds mit in axialer Richtung der Drahtführungsrolle fortschreitender Querschnittsverringerung des Sägedrahts verkleinert. Dadurch wird besonders vorteilhaft die Reibung des Sägedrahts in der Rille erhöht und dadurch unerwünschter Schlupf vermieden, der zu Riefen in der Waferoberfläche führt. Alternativ oder zusätzlich wird bevorzugt der Öffnungswinkel a der Rille mit in axialer Richtung der Drahtführungsrolle fortschreitender Querschnittsverringerung des Sägedrahts spitzer. Dadurch wird weiterhin vorteilhaft die Führung des Sägedrahts deutlich verbessert, wodurch ein unerwünschtes Hin- und Herschwingen sowie das Eindringen von Sägeslurry zwischen Sägedraht und Drahtführungsrolle vermieden werden kann.

Weiterhin alternativ oder zusätzlich wird bevorzugt die Rillentiefe T der Rille mit in axialer Richtung der Drahtführungsrolle fortschreitender Querschnittsverringerung des Sägedrahts verringert. Die Mantelfläche der Drahtführungsrolle ist dabei insbesondere im Wesentlichen zylindrisch. Die Verringerung der Rillentiefe T führt vorteilhaft dazu, dass der Abstand zwischen der äußeren Sägedrahtoberfläche und der Drehachse der Drahtführungsrolle auf einem etwa konstanten Wert gehalten werden kann. Dadurch wird die Zugspannung im Draht vorteilhaft konstant gehalten und somit kann dem Effekt, dass der weniger verschlissene Draht zum gleichen Zeitpunkt bereits tiefer in das Werkstück eingedrungen ist, als der stärker verschlissene Sägedraht, vorteilhaft entgegengewirkt werden. Die vertikale Drahtposition wird also über das gesamte Drahtfeld einheitlicher, das heißt, die Sägespalte sind im Wesentlichen gleich tief in das Werkstück gesägt, wodurch vorteilhaft das Abfallen fertig gesägter Wafer am Prozessende verhindert und die Produktionskapazität der Drahtsäge günstig beeinflusst wird.

Gemäß einer weiteren bevorzugten Ausführungsform ist zusätzlich ein Abstand von benachbarten Rillen der in axialer Richtung der Drahtführungsrolle fortschreitenden Querschnittsänderung des Sägedrahts angepasst, wodurch vorteilhaft eine gleichmäßigere Stärke der Wafer erzielt wird.

Weiterhin bevorzugt ist dasjenige axiale Ende, an welchem sich die Rille mit dem größeren Krümmungsradius R und/oder dem größeren Öffnungswinkel a und/oder der größeren Rillentiefe T befindet, einem Festlager einer Drahtsägevorrichtung zugeordnet. Das Festlager ist in der Regel der Zuführseite der Drahtführungsrolle zugeordnet, während ein Loslager dem anderen Ende zugeordnet ist, von welchem aus der Draht auf eine Aufwickelspule gelangt.

Die Drahtführungsrollen sind üblicherweise mit einem Belag versehen. Üblicherweise werden Drahtführungsrollen verwendet, die eine Beschichtung aus Polyurethan auf Polyester- oder Polyetherbasis aufweisen. Es kann sich dabei um walzbares Polyurethan und um Gieß-Polyurethan handeln. Polyurethane sind weitgehend widerstandsfähig gegen das abrasive Slurry bzw. gegen Abrieb aufgrund von Schneiddrähten mit gebundenem Korn.

Der Belag der Drahtführungsrollen darf nicht zu weich sein, da dieser gegen plastische Verformung der Rillen nicht widerstandsfähig genug ist. In diesem Fall kann der Sägedraht in die Drahtführungsrollen einscheiden, wodurch es zu einer unerwünschten Veränderung der Rillengeometrie kommt. Der Rollenkern, also der Grundkörper der Drahtführungsrolle, besteht vorzugsweise aus Stahl, z. B. ein Spezialstahl mit geringer Wärmeausdehnung (Ingwarstahl). Möglich ist aber auch die Verwendung von Aluminium, Edelstahl, Titan, Carbon oder Verbundwerkstoffen wie GFK und CFK als Rollenkern-Material. Bei GFK und CFK handelt es sich um glasfaser- bzw. kohlefaserverstärkte Kunststoffe.

Die erfindungsgemäßen Drahtführungsrollen werden in Drahtsägen eingesetzt. Dabei wird der Sägedraht mehrfach um die Drahtführungsrollen gewickelt, wodurch sich das Drahtgatter der Drahtsäge bildet. Mit einer derartigen Drahtsäge lassen sich Werkstücke, wobei es sich bevorzugt um Halbleiterstäbe und ganz besonders bevorzugt um Siliciumstäbe handelt, in einem Arbeitsgang zersägen.

Das Werkstück und das Drahtgatter der Drahtsäge führen mit Hilfe einer Vorschubeinrichtung eine senkrecht zur Längsachse des Werkstücks gerichtete Relativbewegung aus, durch die das Werkstück durch das Drahtgatter geführt wird. Zu den Komponenten dieser Drahtsägen gehören ein Maschinenrahmen, eine Vorschubeinrichtung und ein Sägewerkzeug, das aus einem Gatter aus parallelen Drahtabschnitten besteht. Das Werkstück wird auf einer sog. Sägeleiste fixiert, in der Regel durch Aufkitten oder Aufkleben. Die Sägeleiste wird wiederum auf einer Montageplatte befestigt, um das Werkstück in der Drahtsäge einzuspannen. Während des Sägevorgangs bewirkt die Vorschubeinrichtung eine gegeneinander gerichtete Relativbewegung der Drahtabschnitte und des Werkstücks. Als Folge dieser Vorschubbewegung arbeitet sich der mit einer Sägesuspension beaufschlagte Draht unter Bildung von parallelen Sägespalten durch das Werkstück. Die Sägesuspension, die auch als Slurry bezeichnet wird, enthält Hartstoffpartikel, beispielsweise aus Siliciumcarbid, die in einer Flüssigkeit suspendiert sind.

Ein weiterer Gegenstand der Erfindung ist ein Verfahren zum gleichzeitigen Abtrennen einer Vielzahl von Scheiben von einem Werkstück mittels einer Drahtsäge, wobei die zuvor beschriebenen, erfindungsgemäßen Drahtführungsrollen verwendet werden. Im Folgenden wird die Erfindung anhand von Figuren erläutert. Die Ausführungen sind lediglich beispielhaft und schränken den allgemeinen Erfindungsgedanken nicht ein.

### Es zeigen

Figur 1 ein Diagramm zur Verdeutlichung der Qualitätsunterschiede von aus einem Werkstück gesägten Siliciumwafern in Abhängigkeit von deren Position relativ zu der Drahtführungsrolle nach dem Stand der Technik;
Figur 2 schematisch die Geometrie einer Rille einer Drahtführungsrolle nach dem Stand der Technik;
Figur 3 eine erste Ausführungsform der erfindungsgemäßen Drahtführungsrolle;
Figur 4 eine zweite Ausführungsform der erfindungsgemäßen Drahtführungsrolle.

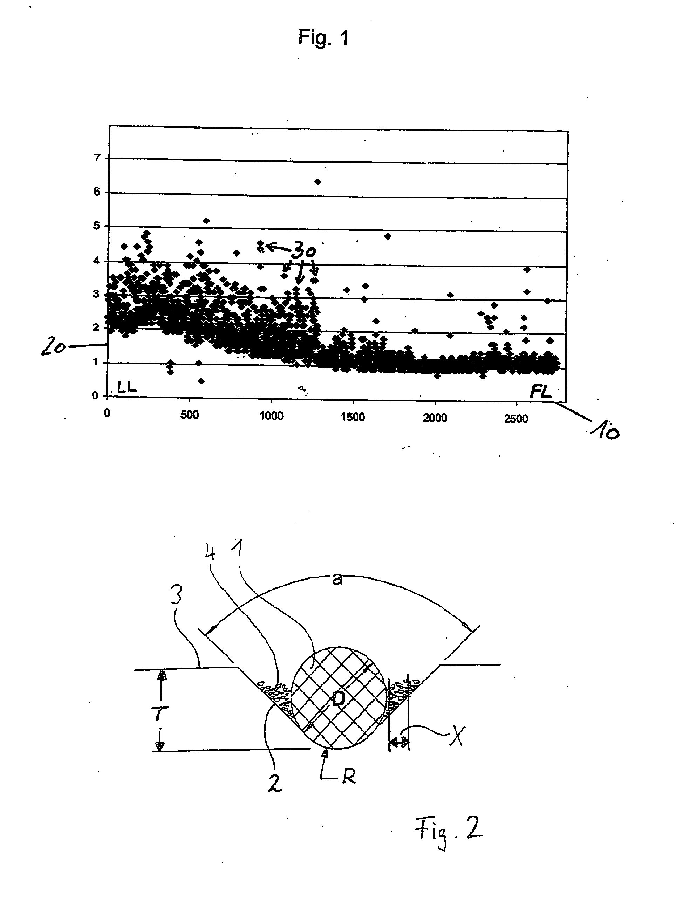

In der Figur 1 ist ein Diagramm dargestellt, welches einen Zusammenhang der Oberflächenqualität von Siliciumwafern mit deren Position in einem Drahtfeld einer Multi-Wire-Saw (MWS) genannten Drahtsäge verdeutlicht. Der einzelne, endliche Sägedraht zwischen mindestens zwei Drahtführungsrollen aufgespannt, welche er spiralförmig von einer Zuführseite bis zu einem gegenüberliegenden Ende umläuft. Die Zuführseite der Drahtführungsrollen wird in der Regel als das Festlager (FL) bezeichnet, das andere Ende als Loslager (LL). In dem Diagramm ist auf einer Ordinate 20 ein Verhältnis der Anzahl von Sägespuren (saw marks) eines Wafers zu der Anzahl von Sägespuren des im Bereich des Festlagers gesägten Wafers. Auf der Ordinate 10 sind die Wafer, beginnend am Loslager (LL, links), mit fortlaufender Nummerierung bis zum Festlager (FL, rechts) aufgetragen. Jeder Datenpunkt 30 repräsentiert einen Wafer, wobei nur einige Datenpunkte beispielhaft mit Bezugszeichen gekennzeichnet sind. Das Diagramm ist mit der großen Anzahl an Datenpunkten 30 dazu vorgesehen, die Verteilung der Sägespuren qualitativ anhand der Häufung der Datenpunkte erkennbar zu machen. Die Anzahl der die Oberfläche beeinträchtigenden Sägespuren ist, vom Festlager ausgehend, über etwa eine halbe axiale Länge der Drahtführungsrollen (vom Festlager FL hinunter bis etwa Wafernummer 1300) annähernd gleichbleibend. Das Verhältnis beträgt dort im Schnitt kaum mehr als 1, was daran erkennbar ist, dass sich der weit überwiegende Teil der Datenpunkte im Wertebereich zwischen 0,8 und 1,3 häuft.

Weiter in axialer Richtung zum Loslager (Wafernummer 0) hin steigt das durchschnittliche Verhältnis, sowie die Streuung der Datenpunkte 30 dann bis zum Loslager an. Nahe des Loslagers liegen die Werte im Wesentlichen bei einem durchschnittlichen Verhältnis zwischen 2 und 3. Das heißt, die Waferoberflächen dieser Wafer weisen im Durchschnitt etwa zwei- bis dreimal so viele Sägespuren auf, wie die Wafer nahe am Festlager. Hierfür ist auch die verminderte Führung des in axialer Richtung zunehmend verschleißenden Sägedrahts in den Führungsrillen der Drahtführungsrolle verantwortlich, sowie zwischen Sägedraht und Drahtführungsrolle eindringende Sägeslurry, wie nachfolgend im Zusammenhang mit Figur 2 erläutert wird.

Figur 2 zeigt schematisch die geometrische Form einer einzelnen Rille 2 einer Drahtführungsrolle 3 nach dem Stand der Technik, wobei der Krümmungsradius des Rillengrundes mit R und der Öffnungswinkel der Rillenflanken mit a bezeichnet sind. Die Rillentiefe ist mit T bezeichnet. Außerdem ist ein Sägedraht 1 mit Durchmesser D dargestellt, sowie Slurrypartikel einer Sägesuspension 4. Ein vergleichsweise großer Abstand X zwischen dem Sägedraht 1 und der Rillenflanke 2, sowie eine vergleichsweise geringe Auflagefläche des Sägedrahts 1 auf dem Rillengrund können zu einem Schwingen des Sägedrahts führen. Derartige Lateralbewegungen quer zur Längsachse des Drahts führen beispielsweise zu unerwünschten Sägespuren in der Waferoberfläche.

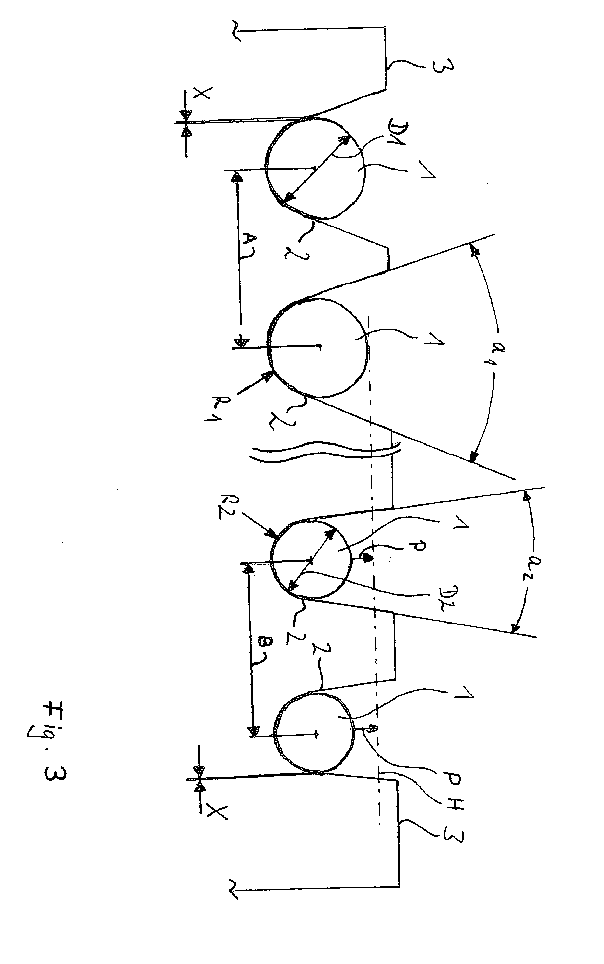

In der Figur 3 ist eine erfindungsgemäße Drahtführungsrolle 3 in einer ersten Ausführungsform schematisch in einer Teilansicht dargestellt. Links sind zwei benachbarte, identische Rillen 2 im Bereich einer Drahtzuführseite der Drahtführungsrolle 3 (vgl. Figur 1, Festlager FL) dargestellt, wo frischer Sägedraht 1 mit dem Durchmesser D=D1 zugeführt wird. Die Rillenflanken schließen einen Öffnungswinkel a=a1 ein und der Krümmungsradius R des gekrümmten Rillengrunds ist mit R1 angegeben. Der Abstand X zur Flanke der Rille 2 ist gering, die Führung des Sägedrahts ist gut.

Rechts in der Darstellung sind zwei weitere Rillen 2 zu sehen, welche nahe dem anderen Ende der Drahtführungsrolle 3 (vgl. Figur 1, Loslager LL) angeordnet sind. Der Sägedraht 1 weist einen im Vergleich zu D1 deutlich geringeren Durchmesser D=D2 auf, was auf Verschleiß desselben zurückzuführen ist. Durch einen erfindungsgemäß angepassten, kleineren Krümmungsradius von R=R2 des gekrümmten Rillengrunds ist die Auflagefläche des Sägedrahts 1 dennoch ähnlich groß, wie bei dem frischen Draht. Der Abstand X ist vorteilhaft klein, da der Öffnungswinkel a=a2 kleiner ist als der Öffnungswinkel a1 und somit ebenfalls dem verringerten Durchmesser D2 des Sägedrahts angepasst ist. Um gleichmäßig starke Wafer sägen zu können, ist darüber hinaus ein Abstand B benachbarter Rillen 2 für verschlissenen Sägedraht 1 kleiner (rechts) als ein Abstand A benachbarter Rillen 2 für frischen Sägedraht 1 (links).

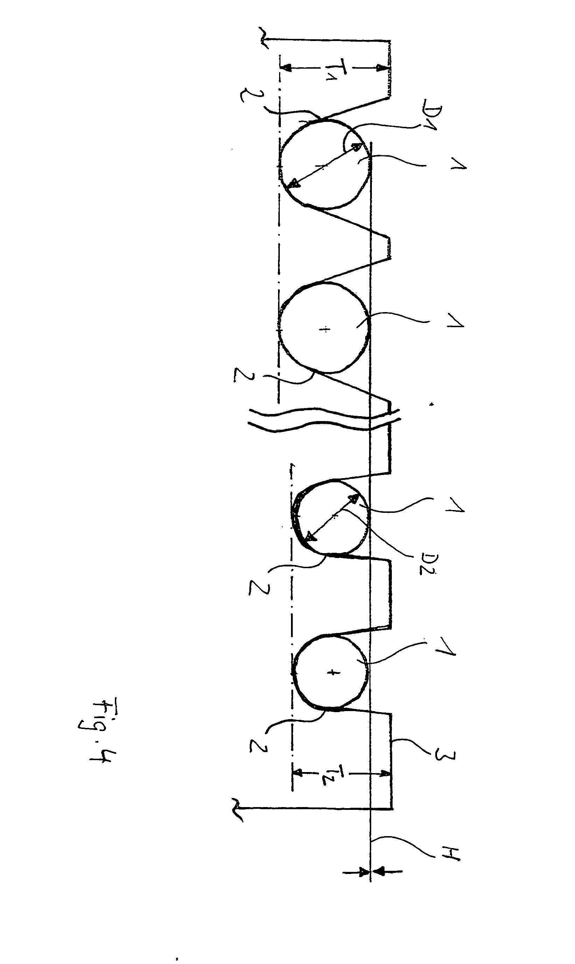

Eine weitere Möglichkeit, die geometrische Form der Rillen 2 der in axialer Richtung der Drahtführungsrolle 3 fortschreitenden Querschnittsänderung des Sägedrahts 1 anzupassen, ist, die Rillentiefe T zu verringern, was nachfolgend mit Bezug auf Figur 4 erläutert wird. Eine gleichmäßige Spannung im Drahtfeld lässt sich vorteilhaft erreichen, indem die umlaufende Oberfläche des Sägedrahts 1 sich auf einer gleichbleibenden Höhe befindet, die mit einer mit H bezeichneten Linie angedeutet ist. Die Pfeile P in Figur 3 verdeutlichen den Abstand des verschlissenen Sägedrahts 1 von der dort gestrichelt dargestellten Linie H, wenn keine Anpassung der Rillentiefe vorgenommen wird. Dadurch, dass in dem zweiten Ausführungsbeispiel gemäß Figur 4 die Rillentiefe rechts in der Darstellung, also bei dem verschlissenen Sägedraht 1 nahe des Loslagers der Drahtführungsrolle 3, die Rillentiefe T mit T2 kleiner gewählt ist, als nahe des Festlagers, links in der Abbildung, mit T=T1, hat der Sägedraht 1 eine über dem gesamten Sägedrahtfeld vorteilhaft gleichmäßige, vertikale Höhe. Im Übrigen entspricht das Ausführungsbeispiel nach Figur 4 dem der Figur 3, so dass auf die Ausführungen dort Bezug genommen wird.

### Bezugszeichen

- 1: Sägedraht
- 2: Rille
- 3: Drahtführungsrolle
- 4: Sägeslurry
- 10: Ordinate
- 20: Abszisse
- 30: Datenpunkte
- a, a1, a2: Öffnungswinkel
- R, R1, R2: Krümmungsradius
- T, T1, T2: Rillentiefe
- X: Abstand
- A, B: Abstand benachbarter Rillen
- D, D1, D2: Sägedrahtdurchmesser
- H: Linie
- P: Pfeil

## Patentansprüche

1. Drahtführungsrolle (3) zur Verwendung in Drahtsägen zum gleichzeitigen Abtrennen einer Vielzahl von Scheiben von einem Werkstück, die eine Vielzahl von Rillen (2) aufweist, über welche ein Sägedraht (1) geführt ist, **dadurch gekennzeichnet, dass** eine geometrische Form der Rillen einer in axialer Richtung der Drahtführungsrolle (3) fortschreitenden Querschnittsänderung des Sägedrahts (1) angepasst ist.

2. Drahtführungsrolle nach Anspruch 1, **dadurch gekennzeichnet, dass** mindestens einer der die geometrische Form der Rillen (2) bestimmenden Parameter Krümmungsradius R des gekrümmten Rillengrunds, Öffnungswinkel a der Rille und Rillentiefe T der Rille in axialer Richtung der Drahtführungsrolle (3) inkonstant ist.

3. Drahtführungsrolle nach Anspruch 2, **dadurch gekennzeichnet, dass** der mindestens eine Parameter einer stetigen Veränderung entlang der Drahtführungsrolle (3) in axialer Richtung unterliegt.

4. Drahtführungsrolle nach einem der Ansprüche 2 oder 3, **dadurch gekennzeichnet, dass** der Krümmungsradius R des gekrümmten Rillengrunds in axialer Richtung der Drahtführungsrolle (3) abnimmt.

5. Drahtführungsrolle nach einem der Ansprüche 2 bis 4, **dadurch gekennzeichnet, dass** der Öffnungswinkel a der Rille in axialer Richtung der Drahtführungsrolle (3) abnimmt.

6. Drahtführungsrolle nach einem der Ansprüche 2 bis 5, **dadurch gekennzeichnet, dass** die Rillentiefe T der Rille sich in axialer Richtung der Drahtführungsrolle (3) verringert.

7. Drahtführungsrolle nach einem der vorhergehenden Ansprüche, **dadurch gekennzeichnet, dass** die Anpassung der geometrischen Form der Rillen (2) in axialer Richtung der Drahtführungsrolle (3) in diskreten Schritten erfolgt.

8. Drahtführungsrolle nach einem der vorhergehenden Ansprüche, **dadurch gekennzeichnet, dass** die Anpassung der geometrischen Form der Rillen (2) in axialer Richtung der Drahtführungsrolle (3) in äquidistanten Schritten erfolgt.

9. Drahtführungsrolle nach einem der vorhergehenden Ansprüche, **dadurch gekennzeichnet, dass** dasjenige axiale Ende, an welchem sich die Rille mit dem größeren Krümmungsradius R und/oder dem größeren Öffnungswinkel a und/oder der größeren Rillentiefe T befindet einem Festlager einer Drahtsägevorrichtung zugeordnet ist.

10. Verfahren zum gleichzeitigen Abtrennen einer Vielzahl von Scheiben von einem Werkstück mittels einer Drahtsäge, wobei Drahtführungsrollen (3) nach einem der Ansprüche 1 bis 9 verwendet werden.
